# EUROPEAN PATENT APPLICATION

(11) **EP 3 363 866 A1**
(43) Date of publication of application: **22.08.2018**
(21) Application number: 18161285.4
(22) Date of filing: 01.06.2005
(51) Int. Cl.: C09B 67/40, C09B 31/068, C10L 1/14, C09D 11/328, C09D 11/36, C10M 171/00, C09B 67/44, C10L 1/00, C10L 1/226, C10M 133/28

(54) **ALIPHATIC HYDROCARBON SOLUBLE RED DYES**

(30) Priority: 01.06.2004 US 575393 P
(62) Divisional of application: 05757290.1
(71) Applicant: United Color Manufacturing Inc., Newtown, Pennsylvania 18940 (US)
(72) Inventor: SMITH, Michael J., Philadelphia, PA Pennsylvania 19134 (US)
(74) Representative: J A Kemp

(57) **Abstract**

A stable liquid concentrate comprising a dye component which contains a substantial amount of a red dye of the formula below: wherein the dye component is dissolved in either an aliphatic hydrocarbon or an alicyclic hydrocarbon.

The composition is used especially for the coloration of petroleum fuels.

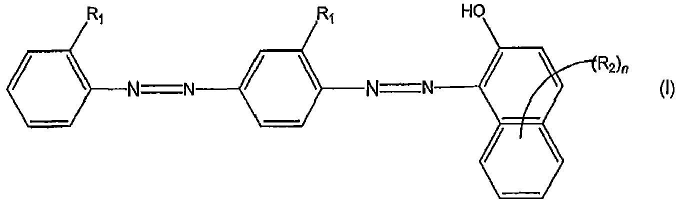

R1 is an ethyl or isopropyl group and R2 is an alkyl group of from 6 to 12 carbon atoms and n is a number from 1, 2 or 3.

## Description

### CROSS-REFERENCE TO RELATED APPLICATIONS

This application claims priority on U.S. Provisional Patent Application No. 60/575,393, for "Aliphatic Hydrocarbon Soluble Red Dyes", filed on June 1, 2005, the entirety of which is incorporated herein by reference.

### FIELD OF THE INVENTION

The present invention relates to red dyes. More particularly, the present invention relates to novel red dyes that are soluble in aliphatic or alicyclic hydrocarbons.

### BACKGROUND OF THE INVENTION

Historically, hydrocarbon soluble red dyes have been used for multiple purposes, especially for the coloration of petroleum fuels. For instance, following the 1921 discovery of tetra ethyl lead as an anti-knock agent for gasoline by Thomas Midgeley of General Motors Corporation, it was rapidly introduced as an additive for gasoline fueled engines. One of the consequences of this was a rash of lead poisoning incidents, some of them fatal. This provoked the US Department of Public Health to mandate that all leaded gasolines must be colored red, for danger, to warn the general public of the highly toxic nature of gasoline, which had previously been used for a variety of ancillary purposes involving human exposure, like cleaning tools and paintwork, as a dry cleaning fluid and for household lighting or heating purposes where it was burned in specially designed but often unvented lamps.

While the sales of leaded gasolines has declined, or even been eliminated altogether in the USA, a more recent demand for red dye for fuels has arisen. Number 2 fuel oil is marketed in several guises which can be divided into two main groups. The first is as a fuel for on road diesel engine propelled vehicles, usage in this application is subject to excise fuel taxes in most industrialized countries. The other main application of Number 2 fuel oil is as home heating oil, which is not usually subject to excise tax. Other tax exempt applications are in agricultural use, stationary engines and railroad locomotive fuel. As the popularity of diesel propelled vehicles has increased, the unscrupulous are naturally tempted to use the untaxed fuel in place of taxed diesel fuel in the operation of their vehicles, especially in fleet operation, where a great deal of money can be saved by avoiding taxes. In 1993 it was decided to color the corresponding untaxed off-road fuel a distinct red color by the addition of dye.

For most of the years of leaded gasoline coloration the principal red dye used was the compound now identified numerically by the Colour Index as C.I. Solvent Red 24. This is a dry powder dye, discovered in the 19^{th} century, which has limited direct solubility in the aromatic hydrocarbon containing gasolines and virtually no direct solubility in essentially aliphatic hydrocarbon based fuels like diesel or home heating oil.

This solubility problem was tackled in two ways; firstly by making solutions containing 10-15% of dyes like Solvent Red 24 in a mixture of alkyl phenols, which substances considerably enhance the solubility of the dyes. These formulations were usually also blended in an aromatic hydrocarbon to reduce their viscosity. Examples of this technology may be found in USP 3,494,714 of Litke et al and Elston's Canadian patent 772,062, the disclosures of which are incorporated herein by reference in their entirety. This technology was limited in scope by the relatively low concentration of the dye substance and the limited resistance of the formulations to crystallization during severe winter weather and prolonged storage.

In 1972 this technology was improved upon by the discoveries of Richard B. Orelup, disclosed in U. S. Patent Nos. 3,690,809 and 3,704,106, the disclosures of which are incorporated herein by reference in their entirety. By covalently bonding selected alkyl groups to the molecular body of C.I. Solvent Red 24, he was able to achieve long term freeze and storage stable aromatic hydrocarbon solutions containing at least the equivalent of a 40% solution of C.I. Solvent Red 24. The principal commercial outcome of Orelup's work is the dye known as C.I. Solvent Red 164.

As the technology of the dyes themselves has advanced, so has the technology of the incorporation of the dye into the fuel. Once done on an essentially manual basis of adding dye to the fuel until it "looks right", dye addition these days is done by expensive precision engineered fuel pumps which inject aliquots of dye into a usually streaming flow of fuel. This precision is demanded by various government specifications concerning the concentration of the dye to be incorporated into the fuel and the tolerances thereof. These pumps are also used for the injection of other additives to the fuel, such additives usually being supplied in some aliphatic or alicyclic solvents, such as, but not limited to, kerosene.

A significant problem which has become apparent with the xylene, or other known aromatic hydrocarbon solvent forms of C.I. Solvent Red 164, is that there is a much faster rate of wear in the moving parts of the pump exposed to the dye solution compared with the wear caused by kerosene based additives or some aliphatic or alicyclic based additives. This effectively reduces the working life of the injector pumps and necessitates more frequent expensive maintenance measures.

The solution to this problem is to replace the xylene used in the Solvent Red 164 composition with an aliphatic hydrocarbon, such as, but not limited to, kerosene. Unfortunately, this combination is very unstable and will crystallize rapidly even at ambient temperatures. A partial solution to this problem has been to dilute the standard full strength xylene-based dye to one half of this by blending it with an equal weight of kerosene. Although this combination does indeed reduce pump wear, its stability in the form of resistance to crystallization is unreliable outside the more temperate climatic regions.

Because C.I. Solvent Red 164 was only soluble in aromatic hydrocarbons, it was widely believed that all similar compositions would also not be easily soluble in aliphatic and alicyclic hydrocarbons. For example, the compounds described in U.S. Patent No. 5,676,708 are non-mutagenic dyes with similar structures to Solvent Red 164. These dyes are described in the patent application as capable of being dissolved in a number of solvents including a number of specifically listed aromatic hydrocarbons. A number of the dyes disclosed by this patent application, including the x-tertiary butyl 2 naphthol derived dye described in example 5 of the '708 Patent, are not soluble in aliphatic hydrocarbons and do not form stable liquid concentrates. At the time, there was no suggestion or motivation to test the solubility of all of the compounds claimed in the '708 Patent in aliphatic hydrocarbons because of the solubility issues encountered with dyes similar to Solvent Red 164. Because a number of the compounds disclosed were not soluble in aliphatic and alicyclic hydrocarbons, it would require undue experimentation to determine which of the disclosed compositions would be soluble in aliphatic and alicyclic hydrocarbons. Therefore, it is an advantage of an embodiment of the present invention to provide a dye composition that is soluble in aliphatic and alicyclic hydrocarbons.

Another application for red dyes soluble in aliphatic hydrocarbons is in the more contemporary field of solvent-based industrial inkjet printing. As with the petroleum fuels, the requirement is for dyes of very high resistance to crystallization from their solvent carrier to prevent the blockage of the inkjets which may be required to deliver 1,000 or more copies per minute without failure. The dyes are also required to be completely waterproof as they may be used to label containers of goods that could be caught in adverse weather conditions or otherwise exposed to water.

What is needed therefore is a red dye that is soluble in aliphatic hydrocarbons. In particular, a red dye soluble in aliphatic or alicyclic hydrocarbons is needed to replace xylene-based or aromatic-based hydrocarbon solvent red dyes.

It is therefore an advantage of some, but not necessarily all, embodiments of the present invention to provide a novel red dye soluble in aliphatic hydrocarbons, which is briefly outlined in the following Summary of the Invention, and more fully described in the Detailed Description.

Additional advantages of various embodiments of the invention are set forth, in part, in the description that follows and, in part, will be apparent to one of ordinary skill in the art from the description and/or from the practice of the invention.

### SUMMARY OF THE INVENTION

The present invention provides dye compositions comprising the following formula that are soluble in aliphatic or alicyclic hydrocarbons: 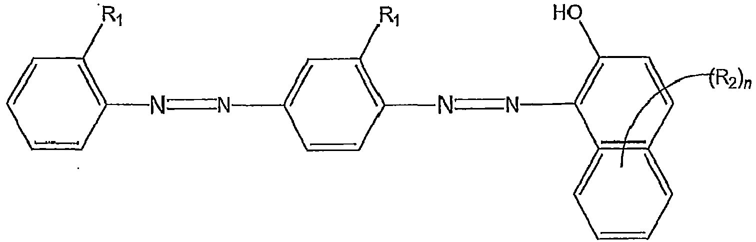 wherein R₁ is an ethyl or isopropyl group and R₂ is an alkyl group of from 6 to 12 carbon atoms and *n* is a number from 1, 2 or 3.

Responsive to the foregoing challenges, Applicant has developed an innovative aliphatic and alicyclic hydrocarbon soluble red dye. It is to be understood that both the foregoing general description and the following detailed description are exemplary arid explanatory only, and are not restrictive of the invention as claimed.

### DETAILED DESCRIPTION OF EMBODIMENTS OF THE INVENTION

Reference will now be made in detail to embodiments of the present invention.

Some of the dyes disclosed by Smith in United States Patent No. 5,676,708, the disclosure of which is incorporated herein by reference in its entirety as non-mutagenic alternatives to C.I. Solvent Red 164 and which differ from Red 164 by the presence of 2-6 additional methylene groups have the unexpected and unpredicted property that they form stable non-crystallizing solutions in aliphatic or alicyclic hydrocarbons, such as, but not limited to, kerosene, diesel fuel, mineral spirits, hexane etc. thereby able to fulfill the expressed desire of refiners and managers of fuel terminal racks for a red dye concentrate completely free from aromatic hydrocarbon solvents. An aliphatic or alicyclic hydrocarbon, such as, but not limited to, kerosene, based dye concentrate also has further advantages compared with one containing xylene that arise from its much lower vapor pressure. These include a high flash point of 150° F compared with 83°F for xylene based, making the product less susceptible to a flash fire while the lower vapor pressure of the inherently less toxic solvent reduces human hazard exposure. A commercial advantage of, for instance, an aliphatic hydrocarbon, such as, but not limited to, kerosene based dye, will be that due to its lower hazard ratings the cost of shipment of the dye concentrates will be substantially less than for their xylene-based counterparts.

The dye component of the present invention is represented by the following formula 1: 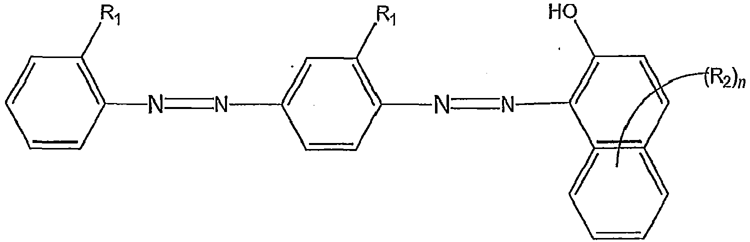 wherein R₁ is an ethyl or isopropyl group and R₂ is an alkyl group of from 6 to 12 carbon atoms and *n* is a number from 1, 2 or 3.

This dye component is soluble in both aliphatic and alicyclic hydrocarbons such as, but not limited to, kerosene or paraffin, diesel fuel, mineral spirits, hexane, pentane, and branched and unbranched carbon chain containing 25-40 carbon atoms.

One embodiment of the present invention is to provide a stable liquid concentrate containing colorant equivalent to at least a calculated 40% solution of C.I. Solvent Reds 24, 25, or 26. The stable liquid concentrate would contain enough dye component of Formula 1 to provide at least a calculated 40% solution of C.I. Solvent Reds 24, 25, or 26 with the remaining portion of the solution containing either aliphatic or alicyclic hydrocarbons, or a combination thereof.

In contrast to their fuel dyeing applications, the fact that these dyes form stable concentrated solutions in low boiling aliphatic hydrocarbons like n-hexane opens up a unique opportunity for these dyes to be used in solvent-based industrial inkjet inks. Ink jet printers used in small office and home office applications invariably use water-based inks which are relatively slow to dry and often lack resistance to subsequent contact with water. By contrast industrial ink jet printers, which may be required to deliver thousands of print copies per minute, frequently use fast drying and waterproof inks based on volatile organic solvents like methanol, ethanol, acetone and butanone, all of which have toxicity issues. The low toxicity aliphatic hydrocarbons are an attractive alternative, except that until now no dyes have been available with adequate solubility in these solvents and subsequent resistance to crystallization. If the latter does occur, the very fine jets through which the ink is delivered to the substrate may become blocked, resulting in expensive down time. A further advantage of these dyes in solvent based ink jet printing is that they are completely impervious to removal by water. While if they were applied to most thermoplastic surfaces they will diffuse slightly into them producing a permanent and non-erasable mark.

A further application for the dyes dissolved in volatile aliphatic hydrocarbons is in the field of permanent marker pens. Until about 20 years ago most pens contained dyes dissolved in an aromatic hydrocarbon solvent, typically xylene and/or toluene. Their ink films dried rapidly even on non-porous substrates. Because of toxicity concerns centered upon the aromatic hydrocarbons, especially when the pens were used in a confined space, this type of writing instrument was phased out and generally replaced by pens using n-propanol. One of the disadvantages of this is that when the ink film is drying it tends to absorb some water from the atmosphere, which greatly retards the final drying of the ink film to a tack-free condition. The ideal replacement for the aromatic hydrocarbons would have been an equally volatile aliphatic hydrocarbon. However, at that time no dyes were available which were completely soluble in this type of medium. However, the fact that the dyes of the present invention are completely soluble and stable in aliphatic or alicyclic hydrocarbons means that this technology is now open for development. As with the ink jet circumstances described above, the fact that these current red dyes will penetrate to some extent into non-porous substrates like polyethylene bags, is an added advantage which does not happen with propanol based inks.

A further application for this dye system is in the dyeing or staining of wood. The hydrocarbon-based solution of the dyes will quickly penetrate the wood without raising its grain. The colored wood can then be finished with protective coats of water-based acrylic or polyurethane coatings without the objectionable bleeding of the dye into it, which can often happen with other dye systems.

The following examples serve to illustrate, but do not limit, the scope of the invention:

### Example 1

500 grams of a composition comprising the dyestuff C.I. Solvent Red 164 (such as, but not limited to, Unisol® Liquid Red B) is weighed into a stirred and heated in a 1 liter glass flask adapted for vacuum distillation. The contents of the flask are placed under a good vacuum and the contents heated to 100°C until no further material distils from the flask, in fact most of the xylene is removed at around 60°C. When solvent stripping is complete the vacuum is released, the heat turned off and the contents of the flask brought back to 500 grams with kerosene. After cooling to ambient temperature, six 80 gram portions of dye are weighed into clear glass jars. Two each of these are stored at ambient temperature (20-22°C), at - 10°C, representing mild winter conditions and at -40°C, representing severe winter storage conditions. After 24 hours the dye samples are collected together and examined. Even the samples stored at ambient temperature were heavily crystallized, while those from the two freezers were frozen solid and did not improve to any great extent after they had been warmed to room temperature, from which we draw the conclusion that C.I. Solvent Red 164 is not stable as a solution concentrate in kerosene. Similar, or even worse, results were obtained when the experiment were repeated with competitive samples of C.I. Solvent Red 164.

### Example 2

22.5 grams of 2,2'-dimethylamino-azobenzene is slurried with 200 mls of water at 45 °C, 30 grams of hydrochloric acid 32% is then dripped into the well-stirred slurry of the amine base which, after a short period of time, is converted to a red dispersion of its hydrochloride. Ice is added to the system to cool it to 0° C. A solution of 7.5 grams sodium nitrite dissolved in 15 mls of water is now added rapidly and the temperature allowed to rise to 10°-15° C. After a short period of stirring a deep brown solution of the corresponding diazonium chloride is obtained. Excess nitrite is then removed by the addition of sulfamic acid.

Meanwhile about 0.105 moles of X-Heptyl-2-naphthol is dissolved in 100 mls toluene and 15 grams of sodium carbonate is added. The mixture is stirred well while the aqueous diazonium solution is run in. Azo coupling is instantaneous with the formation of a deep red dye solution and the evolution of carbon dioxide gas. The coupling is then heated to 60° C. and allowed to separate. The lower aqueous phase is discarded. The toluene solution of the dye is then heated to 140° C. under full vacuum to remove all materials volatile under these conditions. The liquid dye is cooled to 70.degree and 100 mls of methanol are added cautiously. The mixture is brought to reflux then allowed to cool, and the upper methanol layer decanted and the dye rinsed with clean methanol. This is repeated twice, after which final traces of methanol are removed by vacuum distillation. By means of these extractions any unreacted intermediates and subsidiary organic compounds are removed from the dye, which forms a brittle supercooled liquid at ambient temperatures. 500 grams of the xylene based dye was stripped free from xylene according to the procedure of Example 1 of the present application. After the dye had been re-standardized with kerosene, it was packed out and subjected to the same storage conditions detailed in Example 1 above. After 24 hours all samples were observed to be completely free from crystalline dye, although the viscosity of the dye which had been stored at - 40°C was quite high, although it returned to its usual low viscosity on warming to ambient temperature. This test procedure was continued for in excess of 6 months with periodic observations and thawing of the dye, during which time no change in the appearance of the dye concentrates was observed and in particular no formation of solid crystalline material was found.

### Example 3

250 grams of the kerosene based dye produced according to the procedure of Example 2 was mixed with an equal weight of kerosene, thereby reducing it to one half of its color strength. It was then stored and subjected to the same test regimen as Example 2 except that the samples which had been stored at - 40°C, even when observed directly from the freezer, had a viscosity which could be handled easily by a fuel injector pump.

### Example 4

The procedures of Example 1 are repeated except that the 22.5 grams 2,2' dimethylaminoazobenzene was replaced by 25.3 grams of 2,2' diethylaminoazobenzene. 500 grams of the dye was subjected to the same regimen as the dye in Example 2 of the present application. Identical results of ambient and freeze storage stability were observed, although due to its higher molecular weight, the viscosity of the dye is thereby somewhat increased.

### Example 5

250 grams of the dye produced according to Example 4 were diluted to 500 grams with undyed commercial diesel fuel. After packaging, storage and subjection to the same freeze/thaw routine, the solutions of dye were observed to be completely free from crystalline material.

### Example 6

A 25 mg/L solution of the dye prepared according to Example 2 was made in undyed diesel fuel. After being subjected to the same 6 months regimen of freeze/thaw no loss in tinctorial strength of the dye was observed.

### Example 7

The procedure of Example 6 was repeated using the dye prepared according to Example 3, again no loss in color strength indicating unwanted crystallization occurred.

### Example 8

500 grams of the dye stripped according to the procedure of Example 2 was cooled and diluted with an equal weight of n-hexane. Samples were stored at - 10°C for an extended period of time, during which no crystallization was apparent.

### Example 9

A 5% solution of the red dye produced according to Example 8 was made in n-hexane. When the solution is printed onto white bond paper it produces a bright bluish red image with a dominant wavelength of 523 nm. Immersion of part of the printed image in potable water for a period of two weeks showed no bleed of dye into the water or loss of color intensity on the paper. The ink produced according to the above recipe was also subjected to extended periods of cold storage without any adverse effects being noted.

### Example 10

A sample of the inkjet ink prepared according to Example 9 was applied to the surface of a polyethylene bag and allowed to dry. After about 10 minutes the image was wiped with a pad soaked in toluene and again dried. Although most of the ink was removed from the polymer surface by the toluene, it was observed that the polymer was essentially permanently dyed by some of the colorant which had diffused into it.

### Example 11

10 grams of the dye solution produced according to Example 4 is added to 90 grams of iso octane which already contains 5 grams of an aliphatic hydrocarbon soluble resin. Appropriate quantities of this simple ink formulation are loaded into the reservoirs of permanent marker pens which are then allowed to stand for a short time to equilibrate. The pen is then used to make marks on a polyethylene sandwich bag. The ink film dries very rapidly to a tack-free surface. After standing for a short time the surface marks are removed so far as is possible by a quick wipe with absorbent tissue soaked in toluene. After drying the original markings are still visible because some of the dye has diffused directly into the plastic.

### Example 12

40 grams of the x-tertiary butyl 2 naphthol derived dye was prepared by the method outlined in example 5 of U.S. Patent No. 5,676,708 is mixed with 60 grams of Kerosene (Aldrich Chemical Co. Catalogue # 329460) to form a thick slurry. The mixture was then heated to 100° C. and stirred for 15 minutes causing almost all the dye to dissolve or melt. The mixture was then allowed to stand overnight to cool to ambient temperature. Upon inspection, it was observed that much of the previously dissolved mixture had crystallized from solution which when stirred resumed its original physical form of crystalline slurry, even though the kerosene phase was strongly colored. By contrast the preferred dyes derived from heptylated or nonylated 2-naphthol formed mobile solutions from which no solid material was recovered by filtration. These dye concentrates remained free from deposited solids even after storage for 6 months at -25° C.

Numerous characteristics and advantages have been set forth in the foregoing description, together with details of structure and function. The novel features are pointed out in the appended claims. The disclosure, however, is illustrative only, and changes may be made in detail, especially in matter of dilution, solvent, and composition, within the principle of the invention, to the full extent indicated by the broad general meaning of the terms in which the appended claims are expressed.

**The following are aspects of the invention**
1. A stable liquid concentrate comprising a dye component comprising a substantial amount of a dye of the formula: 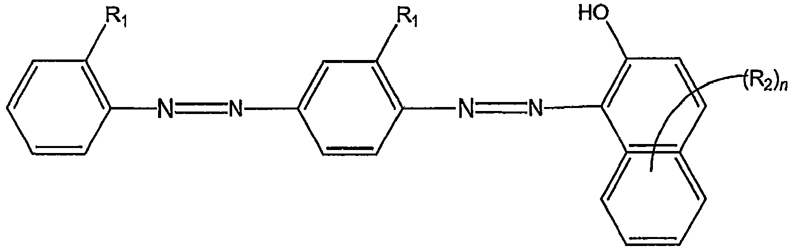 wherein R₁ is an ethyl or isopropyl group and R₂ is an alkyl group of from 6 to 12 carbon atoms and n is a number from 1,2 or 3; wherein the dye component is dissolved in either an aliphatic hydrocarbon or an alicyclic hydrocarbon.
2. A composition of 1 wherein R₁ is an ethyl group and R₂ is selected from the group consisting of heptyl and nonyl alkyl groups.
3. A composition of 1 wherein the aliphatic or alicyclic hydrocarbon is selected from the group consisting of kerosene, diesel fuel, mineral spirits, hexane, pentane, and branched and unbranched carbon chain containing 25-40 carbon atoms.
4. A composition of 2 wherein n is 1.
5. A composition of 2 wherein the aliphatic or alicyclic hydrocarbon is selected from the group consisting of kerosene, diesel fuel, mineral spirits, hexane, pentane, and branched and unbranched carbon chain containing 25-40 carbon atoms.
6. A composition of 5 wherein the aliphatic or alicyclic hydrocarbon is kerosene.
7. A composition of 1 wherein Ri is an isopropyl group and R₂ is selected from the group consisting of heptyl and nonyl alkyl groups.
8. A composition of 7 wherein the aliphatic or alicyclic hydrocarbon is selected from the group consisting of kerosene, diesel fuel, mineral spirits, hexane, pentane, and branched and unbranched carbon chain containing 25-40 carbon atoms.
9. A composition of 8 wherein the aliphatic or alicyclic hydrocarbon is kerosene.
10. A composition of 2 wherein n is 1.
11. A composition of 1 further comprising a petroleum product.
12. A composition of 11 wherein the petroleum product is selected from the group consisting of diesel fuel, gasoline, and heavy petroleum napthalene compounds.
13. A stable liquid concentrate comprising a dye component comprising a substantial amount of a dye of the formula: 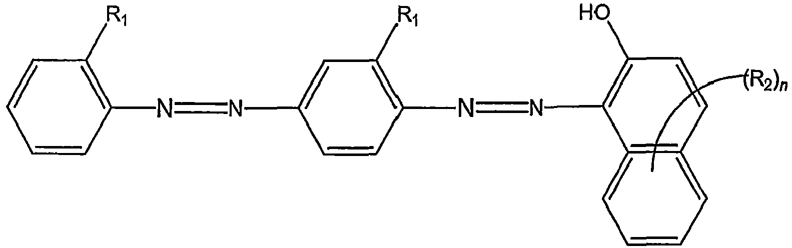
   wherein R₁ is an ethyl or isopropyl group and R₂ is an alkyl group of from 6 to 12 carbon atoms and n is a number from 1,2 or 3;
   wherein the stable liquid concentrate would contain enough dye component to provide a colorant equivalent to at least a calculated 40% solution of C.I. Solvent Reds 24, 25, or 26; and
   wherein the dye component is dissolved in either an aliphatic hydrocarbon or an alicyclic hydrocarbon.
14. A composition of 13 wherein R₁ is an ethyl group and R₂ is selected from the group consisting of heptyl and nonyl alkyl groups.
15. A composition of 14 wherein the aliphatic or alicyclic hydrocarbon is selected from the group consisting of kerosene, diesel fuel, mineral spirits, hexane, pentane, and branched and unbranched carbon chain containing 25-40 carbon atoms.
16. A composition of 15 wherein the aliphatic or alicyclic hydrocarbon is kerosene.
17. A composition of 15 wherein n is 1.
18. A composition of 13 wherein R₁ is an isopropyl group and R₂ is selected from the group consisting of heptyl and nonyl alkyl groups.
19. A composition of 17 wherein the aliphatic or alicyclic hydrocarbon is selected from the group consisting of kerosene, diesel fuel, mineral spirits, hexane, pentane, and branched and unbranched carbon chain containing 25-40 carbon atoms.
20. A composition of 19 wherein the aliphatic or alicyclic hydrocarbon is kerosene.
21. A composition of 3 wherein the aliphatic or alicyclic hydrocarbon is wax.
22. A composition of 21 wherein the wax is a significant part of an aliphatic solvent system.
23. A composition of 22 wherein the aliphatic solvent system is Beeswax.
24. A composition of 23 wherein the composition is used as a colorant for phase change inkjet inks.
25. A composition of 19 wherein the aliphatic or alicyclic hydrocarbon is hexane.
26. A composition of 25 wherein said composition is used as a colorant for permanent marker pen inks.

## Claims

1. A stable liquid concentrate comprising a dye component comprising a substantial amount of a dye of the formula: 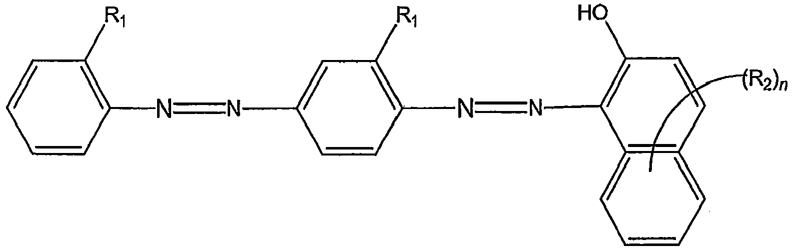 wherein R₁ is an ethyl or isopropyl group and R₂ is an alkyl group of from 6 to 12 carbon atoms and n is a number from 1, 2 or 3; wherein the dye component is dissolved in either an aliphatic hydrocarbon or an alicyclic hydrocarbon.

2. A composition of claim 1 wherein the stable liquid concentrate contains enough dye component to provide a colorant equivalent to at least a calculated 40% solution of C.I. Solvent Reds 24, 25, or 26 in xylene.

3. A composition of claim 1 or 2 wherein R₁ is an ethyl group and R₂ is selected from the group consisting of heptyl and nonyl alkyl groups.

4. A composition of claim 2 or 3 wherein *n* is 1.

5. A composition of claim 1 wherein R₁ is an isopropyl group and R₂ is selected from the group consisting of heptyl and nonyl alkyl groups.

6. A composition of any one of the preceding claims wherein the aliphatic or alicyclic hydrocarbon is selected from the group consisting of kerosene, diesel fuel, mineral spirits, hexane, pentane, and branched and unbranched carbon chain containing 25-40 carbon atoms.

7. A composition of claim 6 wherein the aliphatic or alicyclic hydrocarbon is kerosene.

8. A composition of claim 1 further comprising a petroleum product.

9. A composition of claim 8 wherein the petroleum product is selected from the group consisting of diesel fuel, gasoline, and heavy petroleum naphthalene compounds.

10. A composition of claim 1 wherein the aliphatic or alicyclic hydrocarbon is wax.

11. A composition of claim 2 wherein R₁ is an ethyl group and R₂ is selected from the group consisting of heptyl and nonyl alkyl groups and n is 1 wherein the aliphatic or alicyclic hydrocarbon is hexane.

12. Use of a composition as claimed in any one of claims 1 to 9 as fuel dye.

13. Use of a composition as claimed in claim 10 as a colorant for a phase change ink jet ink.

14. Use of a composition as claimed in claim 11 as a colorant for a permanent marker ink.

15. Use of a composition as claimed in claim 1 for dyeing or staining of wood.
